# EUROPÄISCHE PATENTSCHRIFT

(11) **EP 0 936 367 B1**
(45) Veröffentlichungstag und Bekanntmachung des Hinweises auf die Patenterteilung: **22.05.2002**
(21) Anmeldenummer: 99102569.3
(22) Anmeldetag: 11.02.1999
(51) Int. Cl.: F16C 32/04

(54) **Vorrichtung zur Fixierung eines supraleitend gelagerten Körpers während seiner Einfrierphase**
Device for fixing a body on superconducting bearings during its cooling phase
Dispositif de fixation d'un élément à palier supraconducteur pendant sa période de refroidissement

(30) Priorität: 14.02.1998 DE 19806143
(43) Veröffentlichungstag der Anmeldung: 18.08.1999
(73) Patentinhaber: Canders, Wolf-Rüdiger, Prof. Dr.-Ing., 37520 Osterode (DE)
(72) Erfinder: Canders, Wolf-Rüdiger, 37520 Osterode (DE); May, Hardo, 38124 Braunschweig (DE)
(74) Vertreter: Gramm, Werner, Prof. Dipl.-Ing.

(56) Entgegenhaltungen:
- US-A- 5 094 551
- PATENT ABSTRACTS OF JAPAN vol. 017, no. 584 (M-1501), 25. Oktober 1993 (1993-10-25) & JP 05 172144 A (NTN CORP), 9. Juli 1993 (1993-07-09)

## Beschreibung

Die Erfindung betrifft eine Vorrichtung zur Fixierung eines supraleitend gelagerten Körpers während seiner Einfrierphase, wobei die Fixierung mit Hilfe von zumindest einem aus einer Formgedächtnislegierung bestehenden Element (FG-Element) erfolgt.

Für die Anwendung von Levitationssystemen auf der Basis von Hochtemperatursupraleitern (HTSL) zur berührungsfreien Lagerung gibt es zahlreiche technisch und wirtschaftlich interessante Anwendungen. Beispielsweise seien hier Lagerungen rotierender Turbomaschinen, Trag- und Führsysteme von neuartigen Transportmitteln oder auch die thermische Entkopplung von Cryobehältern für tiefkalte Gase genannt.

Die berührungsfreie Lagerung von Körpern mit Hilfe von Hochtemperatursupraleiter-Permanentmagnetsystemen erfordert stets eine Vorrichtung zur Positionierung des zu lagernden Körpers in der sogenannten "Einfrierposition". In dieser Stellung wird der Körper während des Abkühlvorganges solange gestützt, bis die Supraleiter des Lagerungssystems den supraleitenden Zustand erreicht haben und die Lagerungsfunktion übernehmen können.

Vorzugsweise erfolgt der Übergang der Hochtemperatursupraleiter in den supraleitenden Zustand - kurz "Einfriervorgang" genannt - innerhalb des Magnetfeldes einer Erregereinrichtung, i.a. einer Permanentmagnetanordnung. Dieser Einfriervorgang unter Betriebsfeld wird auch als "operational field freezing" - abk. OFF- bzw. "operational field freezing with offset" - a bk. OFFo - bezeichnet. Letzteres dann, wenn Einfrierposition und Betriebsposition voneinander abweichen.

Hierzu wurden bisher Vorrichtungen eingesetzt, welche durch von außen aufgebrachte Kräfte und Bewegungen die Stützaufgabe erfüllen (Servoantriebe, Hebelmanipulatoren oder zentrierende Kegel). Nach Abkühlung der Supraleiter auf Betriebstemperatur wurde der zu lagernde Körper durch Abrücken dieser Vorrichtungen freigegeben.

Nachteil all dieser Verfahren ist die Notwendigkeit, durch externe Eingriffe (zusätzliche Servosysteme oder Aktoren) die Lagerung in Betrieb zu setzen sowie der dafür erforderliche konstruktive Aufwand, der wegen der ggfs. erforderlichen räumlichen Durchdringung der Tieftemperaturisolation nicht unerheblich ist und zudem fast immer den Nachteil einer Verschlechterung der Wärmeisolierung zur Folge hat.

Die eingangs beschriebene Vorrichtung läßt sich der JP 5/172144A entnehmen. Hier wird ein um eine lotrechte Achse antreibbarer Rotor in der genannten Einfrierposition in vertikal angehobener Stellung durch ein als Kugellager ausgebildetes Fanglager abgestützt, das durch Verschiebung eines Kolbens in die den Rotor abstützende Position gebracht wird. Zur Vertikalverschiebung des Kolbens werden FG-Elemente verwendet, deren Transformationspunkt im Bereich von 70°C - 90°C liegt. Zur Hochverschiebung des Kolbens müssen daher die FG-Elemente beispielsweise durch eine hierfür vorgesehene aktive Heizung beaufschlagt werden.

Der Erfindung liegt die Aufgabe zugrunde, die eingangs beschriebene Vorrichtung hinsichtlich ihres konstruktiven Aufwandes und ihrer Wirkungsweise zu verbessern.

Ausgehend von der eingangs beschriebenen Vorrichtung wird diese Aufgabe erfindungsgemäß dadurch gelöst, daß das zumindest eine FG-Element selbst ein den Körper abstützendes Stützelement bildet und aus einer Formgedächtnislegierung mit einer das FG-Element verkürzenden Schalttemperatur um oder < 100 K besteht, und daß zwischen dem zumindest einen FG-Element und Cryostat des Supraleiters eine thermische Kopplung besteht derart, daß das zumindest eine FG-Element seine Schalttemperatur erst erreicht, nachdem der Supraleiter auf seine Sprungtemperatur abgekühlt worden ist und der Levitationseffekt einsetzt.

Die erfindungsgemäße Vorrichtung gibt somit den Körper je nach Temperatur des Supraleiters automatisch frei oder aber stützt ihn ab und kommt hierbei ohne zusätzliche Hilfsenergie aus. Dabei kann der zu lagernde Körper entsprechend den jeweiligen Erfordernissen in allen translatorischen Freiheitsgraden fixiert werden. Da erfindungsgemäß Formgedächtnislegierungen mit einer Umwandlungstemperatur in der Nähe der Sprungtemperatur der Supraleiter verwendet werden, ist keine aktive Heizung erforderlich. Die Einstellung der Zeit zwischen Transition des Supraleiters und Freigabe des schwebenden Körpers erfolgt passiv über die konstruktive Gestaltung der Wärmekapazitäten und Wärmewiderstände. Dabei wird der schwebende Körper erfindungsgemäß direkt durch die FG-Elemente positioniert; Fanglager und verschiebbarer Kolben können somit entfallen.

Geeignete Formgedächtnislegierungen sind bestimmte NiTi-Legierungen.

Wird das Gerät oder die supraleitend betriebene Maschine stillgesetzt, erwärmt die von außen eindringende Wärme zuerst das FG-Element und erst später den Supraleiter im Cryostaten. Dadurch bringt das FG-Element den zu lagernden Körper wieder in seine Einfrierposition für den nächsten Betriebszyklus. Rotierende Körper müssen zuvor stillgesetzt werden.

Die erfindungsgemäße Lösung ist nicht auf rotierende Körper beschränkt und läßt sich beispielsweise auch zur thermischen Entkopplung ruhender Körper im Vakuum vorteilhaft nutzen. Zweckmäßige und vorteilhafte Ausgestaltungen der FG-Elemente hängen von der jeweiligen Lagerungsaufgabe und den aufzubringenden Tragkräften und Wegen ab. Im einfachsten Fall kann es sich hier um stabförmige Elemente (hohe Kräfte) oder Federelemente (große Wege) in Form von Biegefedern, Schraubenfedern oder Tellerfedern handeln. Entsprechende Konstruktionsvorschläge für die Gestaltung von Aktoren aus FG-Legierungen sind aus der einschlägigen Literatur bekannt.

Da Schalttemperatur des FG-Elementes und Sprungtemperatur des Supraleiters nur in seltenen Fällen übereinstimmen, ist es erfindungsgemäß vorteilhaft, wenn für die thermische Kopplung eine das FG-Element aufnehmende Halterung vorgesehen ist, die mit dem Cryostat in Verbindung steht und zum Ausgleich des Unterschiedes zwischen der Schalttemperatur des FG-Elementes und der Sprungtemperatur des Supraleiters so ausgebildet ist, daß das FG-Element langsamer abkühlt als der Supraleiter, so daß die Sprungtemperatur früher erreicht wird als die genannte Schalttemperatur.

Dadurch wird sichergestellt, daß die Verkürzung des FG-Elementes und damit die Freigabe des zu lagernden Körpers stets erst dann erfolgen, wenn der Supraleiter seine Arbeitstemperatur bereits erreicht hat.

Bei der Lagerung rotierender Körper kann es vorteilhaft sein, ein den Körper in einer gegenüber seiner Betriebsposition exzentrischen oder leicht verschobenen Position fixierendes FG-Element vorzusehen. Der Einfriervorgang erfolgt dann in einer verschobenen Position; nach der Freigabe durch das FG-Element befindet sich der zu lagernde Körper nach seiner Einfederung in die supraleitenden Lager infolge seines Eigengewichtes in der gewünschter. Betriebsposition (Operational field freezing with offset- OFFo). Vorteilhaft hierbei ist, daß die Ruhelage des supraleitend gelagerten Rotors mit der geometrischen Mitte des Lagers übereinstimmt.

In der Zeichnung ist eine als Beispiel dienende Ausführungsform der Erfindung schematisch dargestellt. Es zeigen:
- **Figur 1**: im Längsschnitt einen magnetisch gelagerten Körper in Betriebsposition und
- **Figur 2**: die Vorrichtung gemäß Figur 1 bei Raumtemperatur.

In supraleitenden Lagern, die jeweils aus in einen Cryostaten 1 eingebauten Supraleitern 6 und aus einem Permanentmagnetsystem 5 bestehen, ist ein als Rotor ausgebildeter Körper 4 gelagert. Mit dem Cryostat 1 steht eine Halterung 2 in Verbindung, die ein Stützelement 3 aus einer Formgedächtnislegierung (FG-Element) aufnimmt. Der Übersichtlichkeit halber ist für den Körper 4 nur eine Fixierung in radialer Richtung vorgesehen. Dies kann durch drei stabförmige FG-Elemente 3 auf jeder Seite des Körpers 4 erreicht werden.

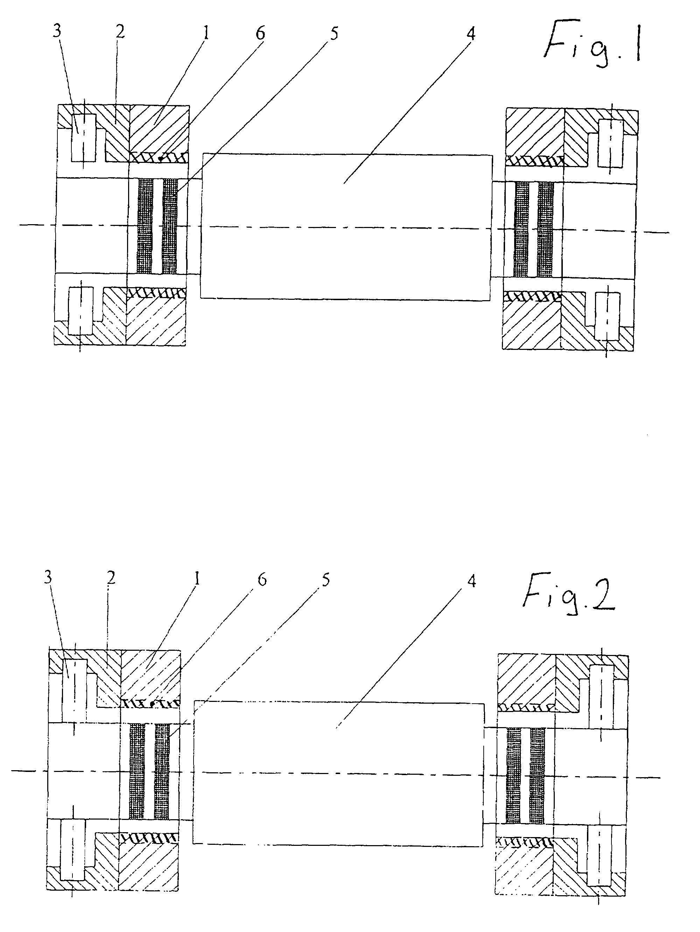

Bei Raumtemperatur, also im warmen Zustand (Figur 2), ruht der Körper 4 auf den FG-Elementen 3. Werden nun die in den Cryostaten 1 befindlichen Supraleiter 6 abgekühlt, werden die FG-Elemente 3 infclge der thermischen Kopplung über ihre Halterung 2 ebenfalls, jedoch verzögert, abgekühlt. Bei entsprechender Dimensionierung und/oder Materialgestaltung der Halterung 2 erreicht das in ihr aufgenommene FG-Element 3 erst dann seine das FG-Element verkürzende Schalttemperatur (siehe Figur 1), wenn die supraleitenden Lager 5, 6 ausreichende Tragkraft entwickelt haben. Der Körper 4 wird nun so weit in der supraleitenden Lagerung einfedern, bis Lagertragkraft und Gewichtskraft im Gleichgewicht sind.

## Patentansprüche

1. Vorrichtung zur Fixierung eines supraleitend gelagerten (5, 6) Körpers (4) während seiner Einfrierphase, wobei die Fixierung mit Hilfe von zumindest einem aus einer Formgedächtnislegierung bestehenden Element (FG-Element) erfolgt, **dadurch gekennzeichnet, daß** das zumindest eine FG-Element selbst ein den Körper (4) abstützendes Stützelement (3) bildet und aus einer Formgedächtnislegierung mit einer das FG-Element (3) verkürzenden Schalttemperatur um oder < 100 K besteht,
und daß zwischen dem zumindest einen FG-Element (3) und Cryostat (1) des Supraleiters (6) eine thermische Kopplung besteht derart, daß das zumindest eine FG-Element (3) seine Schalttemperatur erst erreicht, nachdem der Supraleiter (6) auf seine Sprungtemperatur abgekühlt worden ist und der Levitationseffekt einsetzt.

2. Vorrichtung nach Anspruch 1, **dadurch gekennzeichnet, daß** für die thermische Kopplung eine das FG-Element (3) aufnehmende Halterung (2) vorgesehen ist, die mit dem Cryostat (1) in Verbindung steht und zum Ausgleich des Unterschiedes zwischen der Schalttemperatur des FG-Elementes (3) und der Sprungtemperatur des Supraleiters (6) so ausgebildet ist, daß das FG-Element (3) langsamer abkühlt als der Supraleiter (6), so daß die Sprungtemperatur früher erreicht wird als die genannte Schalttemperatur.

3. Vorrichtung nach Anspruch 1 oder 2, **gekennzeichnet durch** ein den Körper (4) in einer gegenüber seiner Betriebsposition exzentrischen oder leicht verschobenen Position fixierendes FG-Element (3).

## Claims

1. Device for fixing a superconductor-mounted (5, 6) body (4) during its freezing phase, wherein the fixing is performed with the aid of at least one element composed of a shape-memory alloy (SM element), **characterized in that** the at least one SM element itself forms a supporting element (3) that bears the body (4) and is composed of a shape-memory alloy having a switching temperature around or < 100 K that shortens the SM element (3), and **in that**, between the at least one SM element (3) and cryostat (1) of the superconductor (6), there is a thermal coupling that is such that the at least one SM element (3) reaches its switching temperature only after the superconductor (6) has cooled to its critical temperature and the levitation effect sets in.

2. Device according to Claim 1, **characterized in that** there is provided for the thermal coupling a mounting (2) that accommodates the SM element (3) and that is connected to the cryostat (1) and, to compensate for the difference between the switching temperature of the SM element (3) and the critical temperature of the superconductor (6), is formed in such a way that the SM element (3) cools more slowly than the superconductor (6), with the result that the critical temperature is reached sooner than the said switching temperature.

3. Device according to Claim 1 or 2, **characterized by** an SM element (3) that fixes the body (4) in an eccentric or slightly offset position with respect to its operating position.

## Revendications

1. Dispositif de fixation d'un corps (4) sur palier supra-conducteur (5, 6) pendant sa phase de refroidissement, la fixation s'effectuant à l'aide d'au moins un élément (élément FG) constitué d'un alliage à mémoire de forme, **caractérisé en ce que** l'au moins un élément FG lui-même constitue un élément de soutien (3) soutenant le corps (4) et est constitué d'un alliage à mémoire de forme à température de transition raccourcissant l'élément FG (3) inférieure ou environ égale à 100°K,
et **en ce qu'**il y a entre l'au moins un élément FG (3) et le cryostat (1) du supra-conducteur (6) un couplage thermique tel que l'au moins un élément FG (3) n'atteint sa température de transition qu'après que le supra-conduteur (6) a été refroidi à son point de changement brusque de la conductivité et que l'effet de lévitation s'établit.

2. Dispositif selon la revendication 1, **caractérisé en ce que** pour le couplage thermique il est prévu une monture (2) recevant l'élément FG (3) cette monture étant en liaison avec le cryostat (1) et conçue pour la compensation de la différence entre la température de transition de l'élément FG (3) et le point de changement brusque de la conductivité du supra-conducteur (6) de façon que l'élément FG (3) refroidit plus lentement que le supra-conducteur (6), de sorte que le point de changement brusque de la conductivité est atteint plus tôt que ladite température de transition.

3. Dispositif selon la revendication 1 ou 2, **caractérisé par** un élément FG (3) fixant le corps (4) dans une position légèrement déplacée ou excentrique par rapport à sa position de fonctionnement.
